# EUROPÄISCHE PATENTSCHRIFT

(11) **EP 3 884 657 B1**
(45) Veröffentlichungstag und Bekanntmachung des Hinweises auf die Patenterteilung: **16.07.2025**
(21) Anmeldenummer: 19806214.3
(22) Anmeldetag: 20.11.2019
(51) Int. Cl.: H04N 23/67, G02B 7/28, G02B 21/24, G06T 7/00, G02B 21/36, G06V 10/20, G06V 10/44, G06V 10/82, G06V 20/69

(54) **LERNENDER AUTOFOKUS**
LEARNING AUTOFOCUS
MISE AU POINT AUTOMATIQUE APPRENANTE

(30) Priorität: 20.11.2018 DE 102018219867
(43) Veröffentlichungstag der Anmeldung: 29.09.2021
(73) Patentinhaber: Leica Microsystems CMS GmbH, 35578 Wetzlar (DE)
(72) Erfinder: SIECKMANN, Frank, 75031 Eppingen (DE); KAPPEL, Constantin, 69198 Schriesheim (DE)
(74) Vertreter: Maiwald GmbH
(86) Internationale Anmeldenummer: PCT/EP2019/081916
(87) Internationale Veröffentlichungsnummer: WO 2020/104521

(56) Entgegenhaltungen:
- US-A- 4 965 443
- US-A1- 2010 177 189
- US-B1- 9 516 237
- GUOJIN CHEN ET AL: "Research on image autofocus system based on neural network", SPIE - INTERNATIONAL SOCIETY FOR OPTICAL ENGINEERING. PROCEEDINGS, vol. 5253, 2 September 2003 (2003-09-02), US, pages 461, XP055666182, ISSN: 0277-786X, DOI: 10.1117/12.521703

## Beschreibung

Die Erfindung betrifft ein Verfahren und eine Vorrichtung zur Bestimmung einer Fokusposition mittels trainierter Modelle.

Die visuelle Wahrnehmung ist ein wichtiger Bestandteil in der Physiologie des Menschen. Durch optische Reize im menschlichen Auge können Informationen aus unserer Umgebung gewonnen werden. Das menschliche Auge kann hierbei auf Objekte im Nah- und im Fern-Feld scharfstellen. Diese dynamische Anpassung der Brechkraft des Auges wird auch Akkommodation genannt. Auch bei technischen bildgebenden Verfahren ist das Fokussieren auf Objekte für eine scharfe Darstellung des Objektes wichtig. Die Technik automatisch auf Objekte scharfzustellen wird auch als Autofokus bezeichnet. Der Stand der Technik zeigt allerdings einige Nachteile und Probleme bestehender Systeme auf, die im Folgenden betrachtet werden.

Konventionell arbeitende Autofokussysteme erwarten eine klar abzugrenzende Schärfeebene, so dass eine einzige Ebene im Fokus ist und alle sie umgebenden parallelen Ebenen außerhalb des Fokus sind. Die ausgezeichnete Fokusebene unterscheidet sich von den sie umgebenden Ebenen dadurch, dass nur sie einen maximalen Schärfegrad enthält. Dies bedeutet, dass alle anderen parallelen Ebenen ein Objekt unschärfer abbilden. Diese Art von Fokus-System hat mehrere Nachteile. Es kann beispielsweise nicht angewendet werden wenn sich mehrere, oder alle, Bildebenen im Fokus befinden. Dies ist beispielsweise bei konfokal arbeitenden Mikroskop-Systemen per Definition der Fall. Bei konfokal arbeitenden Mikroskopen ist jede Bildebene im Fokus, so dass die Aussage "im Fokus", nicht zutrifft. Hier gibt es keine "scharfen" und "unscharfen" Ebenen. Ein weiterer Nachteil von Autofokus-Systemen nach dem Stand der Technik ist, dass sie nicht auf unterschiedliche Merkmale von Objekten adaptiert werden können. Außerdem lassen sich keine Scanbereiche, beziehungsweise die Anfangs- und Endpunkte von Scanbereichen, bei Mikroskop-Aufnahmen festlegen.

Ein weiteres bekanntes Verfahren zum automatischen Fokussieren ist das Laser-Reflexionsverfahren. Laser-Reflexionsverfahren setzen einen klar messbaren Reflex, ausgehend von einer Referenzfläche, voraus, um genau arbeiten zu können. Diese Art von Fokus-System hat den Nachteil, dass der Grad der optischen Reflexion von den optischen Gegebenheiten abhängt. Der Einsatz von Immersionsflüssigkeiten kann die Reflexintensität reduzieren und unter einen messbaren Wert drücken. Ein optisch präzise angepasster Übergang zwischen Objektiv, Immersionsflüssigkeit und Objektträger würde den Reflexanteil R auf nahe Null reduzieren und somit reflexionsbasierende Autofokus-Systeme blockieren. Außerdem setzten Laser-Reflexionsverfahren voraus, dass das zu untersuchende Objekt sich unverändert immer in derselben Distanz von der Reflexionsfläche befindet. Dies ist allerdings bei sich bewegenden Objekten nicht der Fall. Bei lebenden Zellen kann die Zelle beispielsweise "wandern", so das ihr Abstand zur messbaren Reflexionsfläche nicht äquidistant ist. Des Weiteren sind Laser-Reflexionsverfahren abhängig von der verwendeten Wellenlänge. Insbesondere bei konfokalen Systemen kann die Wellenlänge einen Einfluss auf das Signal-Rausch-Verhältnis haben. Außerdem ist es unmöglich festzustellen, ob sich überhaupt ein Objekt in einem Scanbereich befindet. Bei Reflexionsverfahren wird in jedem Falle ein Bilderstapel aufgenommen, auch wenn sich in dem gescannten Bereich gar kein Objekt befindet, welches man scannen kann. Bei großen Mengen von Scans bedeutet dies einen Verlust an Zeit und Speicherplatz, wodurch hohe Kosten entstehen können.

Ein weiteres Verfahren, dass in Autofokus-Systemen eingesetzt wird ist das Schnittbildverfahren. Schnittbildverfahren haben den Nachteil, dass sie in der Mikroskopie nicht eingesetzt werden können und nur auf die Standard-Kameratechnik festgelegt sind.

Ein Problem aller bekannten Verfahren zur automatischen Fokussierung ist, dass keines in der Lage ist, neben einer Vorhersage einer geeigneten Schärfeebene zudem auch eine Vorhersage eines optimalen 3D-Scanbereiches zu treffen. Zudem sind Standardverfahren oft langsam und eignen sich nur bedingt für Verfahren, in denen eine größere Fläche gescannt wird. Außerdem können bisherige Verfahren nicht zwischen einer Vielzahl von unterschiedlichen Objekten unterscheiden. Somit tritt im Stand der Technik das Problem auf, dass nicht klar definiert ist auf welches Objekt einer Vielzahl von unterschiedlichen Objekten scharf gestellt werden soll.

Ein weiterer Nachteil bekannter Systeme ist, dass häufig eine größere Anzahl an Bildern aufgenommen werden muss, um eine Schärfeebene zu finden. Hierbei kann die Lichtbelastung einer Probe während des Fokussierens erheblich sein. Werden derartige Verfahren auf lebendige Zellen oder lebende Tiere angewendet, so kann die Lichtbelastung zu phototoxischen Effekten führen, derart, dass eine Zelle stirbt oder sich in ihrem Verhalten verändert. Das Autofokus-Verfahren kann also einen erheblichen Einfluss auf das zu untersuchende Objekt nehmen und dadurch Messwerte verfälschen, wenn zu viele Bilder zur Bestimmung einer Schärfeebene aufgenommen werden.

US 4 965 443 A offenbart ein Fokuserkennungsgerät mit neuronalen Netzwerkmitteln.

US 9 516 237 B1 offenbart fokusbasiertes Shuttem.

US 2010/0177189 A1 offenbart ein Verfahren und eine Vorrichtung zum Steuern eines Mikroskops.

GUOJIN CHEN ET AL: "Research on image autofocus system based on neural network", SPIE - INTERNATIONAL SOCIETY FOR OPTICAL ENGINEERING. PROCEEDINGS, US, Bd. 5253, 2 September 2003 DOI:10.1117/12.521703, ISSN 0277-786X, Seite 461, offenbart ein Autofokusverfahren mittels eines neuronales Netzes.

Es ist die Aufgabe der vorliegenden Erfindung, ein verbessertes Verfahren und Vorrichtung zur präzisen Bestimmung einer Fokusposition bereitzustellen.

Diese Aufgabe wird durch den Gegenstand der unabhängigen Ansprüche gelöst. Ausführungsformen sind durch die abhängigen Ansprüche definiert.

Andere Aspekte oder Ausführungsformen fallen in den Geltungsbereich der Ansprüche, wenn sie alle in den unabhängigen Ansprüchen angegebenen Merkmale aufweisen.

Teile der Beschreibung und Zeichnungen, die sich auf Ausführungsformen oder Aspekte beziehen, die nicht von den Ansprüchen abgedeckt sind, werden nicht als Ausführungsformen der Erfindungen dargestellt, sondern als Beispiele, die zum Verständnis der Erfindung nützlich sind.

Aufgabe der vorliegenden Erfindung ist es somit, effizient und schnell eine Fokusposition zu bestimmen. Die vorliegende Erfindung löst die angesprochenen Probleme und die Aufgabe durch ein Verfahren und eine Vorrichtung zur Bestimmung einer Fokusposition mittels einer Analyse von aufgenommenen Bildern durch ein trainiertes Modell.

Das erfindungsgemäße Verfahren zur Bestimmung einer Fokusposition umfasst ein Aufnehmen mindestens eines ersten Bildes, wobei Bilddaten des mindestens einen aufgenommenen ersten Bildes von mindestens einer ersten Fokusposition bei der Aufnahme des mindestens einen ersten Bildes abhängen, und ein Bestimmen einer zweiten Fokusposition basierend auf einer Analyse des mindestens einen aufgenommenen ersten Bildes mittels eines trainierten Modells.

Das erfindungsgemäße Verfahren und die erfindungsgemäße Vorrichtung haben den Vorteil, dass trainierte Modelle, die auf neuronalen Netzen, z.B. im Sinne von Deep-Learning, basieren können, auf erfasste Daten zur Bestimmung einer Fokusposition angewendet werden können. Deep-Learning-Modelle können ähnlich präzise oder bessere Vorhersagen über den optimalen Fokus machen wie ein Experte in bildgebenden Verfahren. Das Modell lässt sich auf ein breites Spektrum von Proben, Bildaufnahmebedingungen und Aufnahmemodalitäten anwenden und ermöglicht eine höhere Genauigkeit im Vergleich zu Autofokus-Systemen aus dem Stand der Technik.

Außerdem haben das erfindungsgemäße Verfahren und die erfindungsgemäße Vorrichtung den Vorteil, dass bei Verwendung eines einzelnen Bildes als Eingabewert für das neuronale Netz die Fokusposition viel schneller und probenschonender bestimmt werden kann als das bei bisherigen bildbasierten Fokussiersystemen möglich ist, die eine Vielzahl von Bildern benötigen um eine Fokusposition zu finden. Außerdem kann mittels trainierter Modelle auf bestimmte Objekte in Bilddaten fokussiert werden die in einem Kontext mit einem Training des trainierten Modells stehen. Dies ermöglicht eine Fokussierung auf ein abgebildetes Objekt unabhängig von einem Ort des Objektes. Ein weiterer Vorteil des erfindungsgemäßen Verfahrens und der erfindungsgemäßen Vorrichtung ist, dass sie in unterschiedlichen Systemen, wie beispielsweise Konfokal-Mikroskopen und Digitalkameras, angewendet werden können.

Das erfindungsgemäße Verfahren und die erfindungsgemäße Vorrichtung können jeweils durch spezifische Ausgestaltungen weiter verbessert werden. Einzelne technische Merkmale der nachfolgend beschriebenen Ausgestaltungen der Erfindung können dabei beliebig miteinander kombiniert und/oder weggelassen werden, sofern es nicht auf den mit dem weggelassenen technischen Merkmal erzielten technischen Effekt ankommt.

In einer Ausführungsform kann das Verfahren den Schritt des Aufnehmens mindestens eines zweiten Bildes mit der bestimmten zweiten Fokusposition, die beispielsweise entlang einer optischen Achse zur ersten Fokusposition verschoben ist, umfassen. Dies kann automatisch geschehen und ermöglicht somit eine schnelle Anpassung an spezielle Gegebenheiten während einer Messung und eine Optimierung einer Fokusposition noch zu einer Laufzeit einer Messung. Das mindestens eine erste Bild kann mit einer niedrigeren Auflösung als das mindestens eine zweite Bild aufgenommen werden. Dadurch lässt sich die Geschwindigkeit erhöhen, mit der fokussierte Bilder aufgenommen werden können.

In einem Ausführungsbeispiel können das mindestens eine erste Bild und das mindestens eine zweite Bild Informationen enthalten, die in einem Kontext mit einem Training des trainierten Modells stehen. Steht beispielsweise mindestens ein Objekt in einem Kontext mit einem Training des trainierten Modells, so kann das mindesten eine von ein oder mehreren Objekten die in einem oder mehreren des mindestens einen aufgenommenen ersten Bildes abgebildet werden in dem mindestens einen aufgenommenen zweiten Bild schärfer abgebildet werden als in dem mindestens einen aufgenommenen ersten Bild. Dies ermöglicht ein permanentes Nachfokussieren, und eine scharfe Abbildung von bewegten Objekten über mehrere Bilder in einem zeitlichen Abstand.

In einer Ausgestaltung des Verfahrens kann das Bestimmen der zweiten Fokusposition ein Bestimmen eines 3D-Scanbereiches umfassen. Dies kann auf Informationen beruhen mit denen das Modell trainiert wurde. Beispielsweise kann das Modell auf ein Objekt oder eine Probe bestimmter Größe trainiert worden sein und kann basierend auf der Analyse des mindestens einen ersten Bildes eine Fokusposition sowie eine Ausdehnung des Objektes bestimmen. Das Bestimmen eines Scanbereichs ermöglicht eine schnelle Ausführung von Experimenten bei denen ein Objekt entlang einer Achse gescannt werden soll.

In einer Ausführungsform kann das Verfahren den Schritt des Einstellens einer Vorrichtung, beispielsweise ein Mikroskop oder eine Digitalkamera, auf die zweite Fokusposition umfassen. Die Vorrichtung kann ein optisches System und einen Sensor, mittels derer das Einstellen der Vorrichtung auf die zweite Fokusposition durchgeführt werden kann, umfassen. Eine Ausgestaltung des erfindungsgemäßen Verfahren kann dadurch erreicht werden, dass das Einstellen der Vorrichtung auf die zweite Fokusposition ein Verschieben des optischen Systems relativ zu dem Sensor umfasst. Das Einstellen der Vorrichtung auf die zweite Fokusposition kann zusätzlich oder alternativ auch ein Verschieben des optischen Systems und des Sensors relativ zu einem Objekt oder entlang einer optischen Achse umfassen. Das Einstellen der Vorrichtung kann durch einen Fokustrieb durchgeführt werden.

In ein oder mehreren Ausgestaltungen des erfindungsgemäßen Verfahrens kann das Verfahren den Schritt des Erfassens von Daten umfassen. Dies kann ein Erfassen eines dritten Bildes umfassen. Die Bilddaten des erfassten dritten Bildes können von einer nutzerdefinierten Fokusposition abhängen, die durch einen Anwender eingestellt wurde. Die nutzerdefinierte Fokusposition kann von der zweiten Fokusposition abweichen, und die erfassten Daten können das erfasste dritte Bild, und eine Repräsentation der Abweichung von der zweiten Fokusposition zu der nutzerdefinierten Fokusposition und/oder eine Repräsentation der nutzerdefinierten Fokusposition umfassen. Durch das Erfassen einer nutzerdefinierten Fokusposition kann das System schlussfolgern, dass der Anwender oder Nutzer nicht mit der durch das trainierte Modell vorgeschlagenen Fokusposition einverstanden war. Diese Daten können helfen ein trainiertes Modell beständig zu verbessern, indem sie für eine Feinjustage des trainierten Modells oder ein Training von neuen Modellen verwendet werden. Um ausreichend Daten für ein Training eines trainierten Modells zu bekommen, kann das Erfassen der Daten ein Erfassen eines Bilderstapels umfassen. Die Bilddaten jedes Bildes des Bilderstapels können von einer unterschiedlichen Fokusposition abhängen, die einen bekannten Abstand zu der nutzerdefinierten Fokusposition hat. Der Abstand kann einem ganzzahligen Vielfachen einer axialen Auflösung eines verwendeten Objektivs zu der nutzerdefinierten Fokusposition entlang einer optischen Achse entsprechen. Das zu der nutzerdefinierten Fokusposition zugehörige erfasste dritte Bild kann als Soll-Zustand für ein Training, das die erfassten Daten umfasst, markiert werden.

In einer Ausgestaltung des Verfahrens können die erfassten Daten Metadaten umfassen. Die Metadaten können Informationen zu Bildaufnahmemodalitäten, Beleuchtung, einer Probe, einem Objekt, Systemparametern einer Vorrichtung zum Erfassen von Bildern, Bildaufnahmeparametern, einem Kontext und/oder Objektivparametern umfassen. Somit lassen sich Modelle trainieren, die auf bestimmte Gegebenheiten trainiert wurden und dadurch sehr präzise Vorhersagen liefern können im Vergleich zu Modellen die an Daten mit einer großen Variabilität trainiert wurden. Das trainierte Modell zur Bestimmung einer Fokusposition kann beispielsweise aus einer Vielzahl von Modellen ausgewählt werden, wobei die Vielzahl von trainierten Modellen durch ein Einsatzgebiet klassifiziert sein kann, jedes der Vielzahl von trainierten Modellen in bestimmter Weise trainiert wurde, die Vielzahl von trainierten Modellen hierarchisch organisiert ist, und/oder einzelne trainierte Modelle aus der Vielzahl von trainierten Modellen auf einzelne Typen von Proben, Experimente, Messungen oder Geräteeinstellungen spezialisiert sind.

In ein oder mehreren Ausgestaltungen des erfindungsgemäßen Verfahrens kann das Verfahren des Weiteren den Schritt des Adaptierens des trainierten Modells mittels der erfassten Daten umfassen. Dies kann durch ein Trainieren eines Teils des trainierten Modells mittels der erfassten Daten, oder durch ein Nachtrainieren des trainierten Modells mittels aggregierter Daten erfolgen, wobei die aggregierten Daten aus einer oder mehreren Quellen stammen und/oder die erfassten Daten umfassen. Somit lässt sich die Vorhersagegenauigkeit von trainierten Modellen, wie beispielsweise Deep-Learning-Modellen, beständig verbessern, da das Verfahren mittels Feedback sich neuen Gegebenheiten anpassen kann und so flexibler ist als Verfahren aus dem Stand der Technik. Weil sich das System durch "lernen" aus dem Nutzerverhalten verbessert, wird die Genauigkeit des Autofokus immer höher. Durch die ständige Verbesserung des Modells werden außerdem immer neue Anwendungsfelder erschlossen. Des Weiteren wird das Verfahren gegenüber neuen, bisher ungesehenen Proben immer robuster. Im Gegensatz dazu müssen bisherige Ansätze entweder so allgemeingültig sein, dass sie bei der Genauigkeit Kompromisse eingehen oder sie sind so spezifisch, dass sie sich nicht auf neue Probentypen oder Bildaufnahmebedingungen anwenden lassen. Somit lässt sich das erfindungsgemäße Verfahren auf ein breites und ständig wachsendes Spektrum von Proben, Bildaufnahmebedingungen und Aufnahmemodalitäten anwenden.

In einer Ausgestaltung der erfindungsgemäßen Vorrichtung kann die Vorrichtung zur Bestimmung einer Fokusposition ein oder mehrere Prozessoren und ein oder mehrere computerlesbare Speichermedien umfassen. Auf den Speichermedien sind computerausführbare Anweisungen gespeichert, die, wenn sie von dem einen oder den mehreren Prozessoren ausgeführt werden, bewirken, dass das oben beschriebene erfindungsgemäße Verfahren ausgeführt wird.

In einer Ausführungsform kann die erfindungsgemäße Vorrichtung Teil eines Bildaufnahmesystems zum Einstellen einer Fokusposition sein. Das Bildaufnahmesystem kann eine Digitalkamera (beispielsweise eine Kompaktkamera oder eine Kamera für die Verwendung in der Fertigung, bei Robotern oder autonom agierenden Maschinen), einen Computer mit Kamera, der auch tragbar sein kann (beispielsweise ein Notebook, ein Handy, ein Smartphone oder ein Tablet), oder ein Mikroskop oder Mikroskopsystem umfassen. Alternativ kann die Vorrichtung räumlich von dem Bildaufnahmesystem getrennt sein und über ein Netzwerk mit dem Bildaufnahmesystem verbunden sein. In einem Ausführungsbeispiel kann das Bildaufnahmesystem mindestens einen Sensor, ein optisches System, um ein oder mehrere Objekte auf einen des mindestens einen Sensors abzubilden, und mindestens einen Aktor umfassen. Der mindestens eine Aktor, der beispielsweise ein Z-Trieb eines Stativs, ein Z-Galvanometer, ein Piezo-Fokus an einem Objektiv des optischen Systems, einen Direktantrieb, einen Linearmotor, einen Schrittmotor, einen Ultraschallmotor, einen Ringmotor, einen Mikromotor, und ein Piezo-Tisch sein kann, kann das Bildaufnahmesystem auf die zweite Fokusposition einstellen. In Ausführungsformen kann der mindestens eine Aktor Teil eines fokussierfähigen Objektivs sein, wobei das fokussierfähige Objektiv auf Fokus-Technologien ohne Piezo-Antrieb basiert. Das Bildaufnahmesystem kann Mittel umfassen, die eingerichtet sind, über ein Netzwerk trainierte Modelle von einer Cloud herunterzuladen und/oder erfasste Daten auf die Cloud hochzuladen. Somit lassen sich Modelle beständig aktualisieren und es können schnell trainierte Modelle zur Verfügung gestellt werden. Eine weitere Ausgestaltung des erfindungsgemäßen Bildaufnahmesystems, die mit den vorherigen kombinierbar ist, kann eine Nutzerschnittstelle umfassen, die eingerichtet ist, so dass mittels der Nutzerschnittstelle eine nutzerdefinierte Fokusposition eingestellt werden kann und/oder Eingabeparameter erfasst werden können.

Der vorliegende Erfindungsgegenstand soll im Weiteren anhand beispielhafter Zeichnungen näher beschrieben werden. In den Zeichnungen sind Beispiele vorteilhafter Ausgestaltungen der Erfindung gezeigt.

Es zeigen:
Figur 1 eine schematische Darstellung eines erfindungsgemäßen Systems zur Bestimmung einer Fokusposition nach einer Ausführungsform,
Figur 2 eine schematische Darstellung eines erfindungsgemäßen Systems zur Bestimmung einer Fokusposition nach einer Ausführungsform,
Figur 3 eine schematische Darstellung eines erfindungsgemäßen Verfahrens zur Bestimmung einer Fokusposition nach einer Ausführungsform,
Figur 4 eine schematische Darstellung eines trainierten Modells zur Bestimmung einer Fokusposition nach einer Ausführungsform, und
Figur 5 ein schematisches Flussdiagramm eines erfindungsgemäßen Verfahrens.

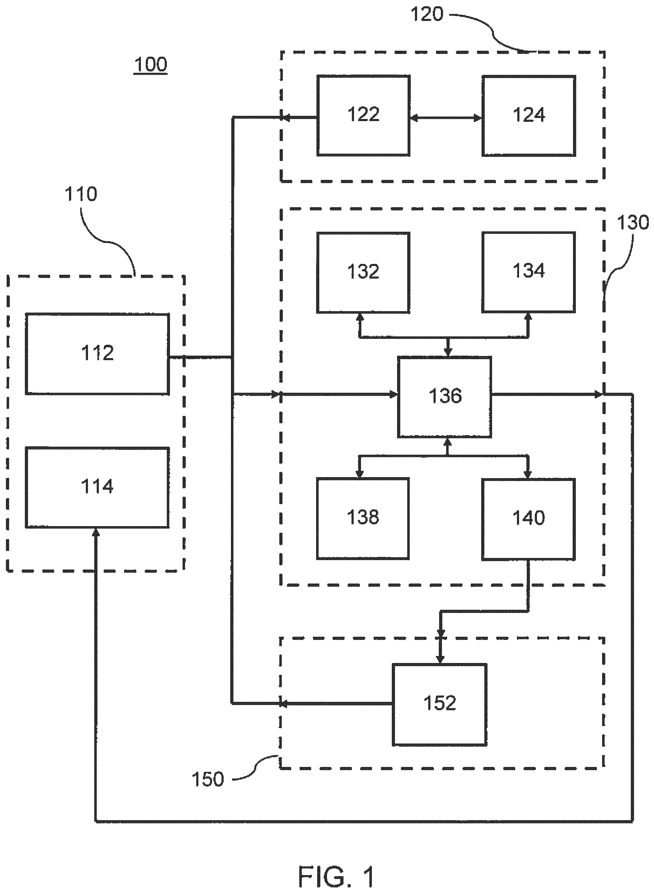

Figur 1 zeigt System 100 zur Bestimmung von ein oder mehreren Fokuspositionen für bildgebende Verfahren. Das System 100 umfasst eine Vorrichtung 110 zum Erfassen von Bildern. Die Vorrichtung 110 zum Erfassen von Bildern kann eine Kamera, wie zum Beispiel eine Digitalkamera, eine in einen tragbaren Computer eingebaute Kamera, wie zum Beispiel eine Smartphone-Kamera, oder ein Mikroskop, wie zum Beispiel ein Weitfeld-Mikroskop, ein Konfokal-Mikroskop, oder Lichtblattmikroskop umfassen. Die Vorrichtung 110 zum Erfassen von Bildern kann ein oder mehrere Sensoren 112 und ein oder mehrere Aktoren 114 umfassen. Des Weiteren kann die Vorrichtung 110 ein optisches System umfassen, das aus mindestens einem der folgenden optischen Bauelemente besteht: eine oder mehrere Linsen, ein oder mehrere Spiegel, ein oder mehrere Blenden und eine oder mehrere Prismen, wobei die Linsen verschiedene Linsentypen umfassen können. Das optische System kann ein Objektiv umfassen. Außerdem kann die Vorrichtung 110 ein oder mehrere Lichtquellen zur Beleuchtung und/oder Fluoreszenzanregung umfassen.

Die ein oder mehreren Sensoren 112 und ein oder mehreren Aktoren 114 können Daten empfangen und/oder senden. Einer der Sensoren 112 kann einen Bildsensor, beispielsweise einen Siliziumsensor wie einen CCD-Sensor ("charge-coupled device") oder einen CMOS-Sensor ("complementary metal-oxide-semiconductor"), zur Aufnahme von Bilddaten umfassen, wobei ein Objekt mittels des optischen Systems auf dem Bildsensor abgebildet werden kann. Die ein oder mehreren Sensoren können Bilddaten, vorzugsweise in digitaler Form, und Metadaten erfassen. Bilddaten und/oder Metadaten können verwendet werden um beispielsweise eine Fokusposition vorherzusagen. Metadaten können Daten umfassen die in einem Zusammenhang mit der Aufnahme eines oder mehrerer Bilder stehen, beispielsweise Bildaufnahmemodalitäten, wie Hellfeldbeleuchtung, Epifluoreszenz, differentieller Interferenzkontrast oder Phasenkontrast, Bildaufnahmeparameter, wie Intensität der Leuchtquelle(n), Verstärkung am Bildsensor, Abtastrate, und Objektivparameter, wie die axiale Auflösung des Objektivs. Bilddaten und Metadaten können in einer Vorrichtung 130, wie beispielsweise einem Arbeitsplatzrechner, einem Embedded-Computer oder einem Kleinstrechner, in einer Bildaufnahmevorrichtung 110 verarbeitet werden.

Auch wenn Figur 1 in der schematischen Darstellung die Bereiche 110, 120 und 130 abgrenzt, so können diese Bereiche Teil einer einzigen Vorrichtung sein. Alternativ können sie in anderen Ausführungsformen auch zwei oder drei Vorrichtungen umfassen, die räumlich voneinander getrennt sind und über ein Netzwerk miteinander verbunden sind. Die Vorrichtung 130 kann in einer Ausführungsform ein oder mehrere Prozessoren 132, einen flüchtigen Datenspeicher 134, ein neuronales Netz oder trainiertes Modell 136, einen permanenten Datenspeicher 138 und eine Netzwerkanbindung 140 umfassen.

Die ein oder mehreren Prozessoren 132 können Rechenbeschleuniger, wie Graphical Processing Units (GPUs), TensorFlow Processing Units (TPUs) auf Machine Learning (ML) und/oder Deep Learning (DL) spezialisierte Application Specific Integrated Circuits (ASICs) oder Field Programmable Gated Arrays (FPGAs) oder mindestens eine Central Processing Unit (CPU) umfassen. Mittels der ein oder mehreren Prozessoren 132 können trainierte Modelle zur Fokusbestimmung angewendet werden. Der Einsatz trainierter oder prädiktiver Modelle, die in Vorrichtungen zur Erfassung von Bildern zur Analyse der erfassten Bilder eingesetzt werden, hilft Vorhersagen zu machen (Inferenz). Die Inferenz umfasst eine Vorhersage einer abhängigen Variable (genannt y) auf Basis einer unabhängigen Variable (genannt X) mit Hilfe eines bereits vorher trainierten neuronalen Netzes oder Modells. Eine Anwendungsmaschine oder Vorrichtung 130, die nicht (primär) dazu dient neuronale Netze zu trainieren, kann also ausgestaltet sein Vorhersagen auf Basis trainierter Netze zu treffen. Eine Übertragung eines trainierten neuronalen Netzes auf die Anwendungsmaschine oder die Vorrichtung 130, kann derart erfolgen, dass die Anwendungsmaschine oder die Vorrichtung 130 durch diese Übertragung zusätzliche "Intelligenz" gewinnt. Dadurch kann die Anwendungsmaschine oder die Vorrichtung 130 in die Lage versetzt werden eine gewünschte Aufgabe selbstständig zu lösen. Insbesondere Inferenz, die Größenordnungen weniger Rechenleistung benötigt als das Training, also die Entwicklung eines Modells, funktioniert auch auf üblichen CPUs. Mit Hilfe der ein oder mehreren Prozessoren 132 können in Ausführungsformen Modelle oder Teile von Modellen mittels künstlicher Intelligenz (KI) trainiert werden. Die trainierten Modelle selbst können durch die ein oder mehreren Prozessoren ausgeführt werden. Somit ergibt sich eine kognitiv erweiterte Vorrichtung 130. Kognitiv erweitert bedeutet, dass die Vorrichtung durch Einsatz neuronaler Netzwerke (bzw. Deep-Learning-Modelle) oder anderer Maschinenlernverfahren dazu befähigt werden kann, Bildinhalte oder andere Daten semantisch zu erkennen und zu verarbeiten.

Über die Netzwerkanbindung 140 können Daten zu einer Cloud 150 hochgeladen oder von einer Cloud runtergeladen werden. Die Daten können Bilddaten, Metadaten, trainierte Modelle, deren Bestandteile oder versteckte Repräsentationen ("hidden representations") von Daten umfassen. Somit kann der Computer 130 über die Netzwerkanbindung 140 neue, verbesserte Modelle von der Cloud 150 laden. Zur Verbesserung von Modellen können automatisch oder halbautomatisch neue Daten in die Cloud 150 geladen werden. In einer Ausführungsform wird ein Überschreiben einer vom neuronalen Netz vorhergesagten Fokusposition erfasst. Durch das Überschreiben können neue Wertepaare, wie Bilddaten und eine Fokusposition, die einer gewünschten Fokusposition oder einem Soll-Zustand entspricht, für ein Training oder Fine-Tuning des neuronalen Netzes 136 oder eines in der Cloud gespeicherten neuronalen Netzes erzeugt werden. Die so erzeugten Daten erweitern beständig den zur Verfügung stehenden Trainingsdatensatz für ein Training von Modellen in der Cloud 150. Dadurch entsteht eine Feedback-Schleife zwischen Anwender und Hersteller, durch die sich neuronale Netze für bestimmte Anwendungen beständig verbessern lassen. Die Cloud 150 kann eine KI-Komponente 152 umfassen, mittels der Modelle und/oder neuronale Netze trainiert werden können.

Des Weiteren umfasst das System 100 eine Nutzerschnittstelle 120, die Teil der Vorrichtung 110, des Computers 130 oder einer anderen Vorrichtung, wie beispielsweise einem Steuerrechner oder einem Arbeitsplatzrechner, sein kann. Die Nutzerschnittstelle 120 umfasst ein oder mehrere Schaltelemente 122, wie beispielsweise einen Fokusregler, und eine softwareimplementierte Nutzerschnittstelle 124, über die zusätzliche Parameter für das neuronale Netz 136 eingegeben werden können. Dies kann Informationen über eine Probenart und Experimentalparameter, wie Färbung, Kulturbedingungen umfassen. In einer Ausführungsform kann der Nutzer ein Ergebnis aus einem neuronalen Netzwerk überschreiben und so zu dessen Verfeinerung (Fine-Tuning) beitragen. Der Nutzer kann beispielsweise die für einen Anwendungszweck richtige oder gewünschte Fokusposition eingeben.

Das neuronale Netz 136 kann basierend auf Eingabewerten eine Vorhersage treffen. Die Eingabewerte können Bild und/oder Metadaten umfassen. Zum Beispiel kann das neuronale Netz 136 eine Vorhersage über eine korrekte Fokusposition basierend auf Eingabewerten machen. Die Vorhersage kann verwendet werden um mindestens einen der ein oder mehreren Aktoren 114 entsprechend zu steuern. In Abhängigkeit der Vorhersage oder der Analyse der Eingabewerte mittels des neuronalen Netzes kann ein Fokustrieb eingestellt werden. Die ein oder mehreren Aktoren können einen Z-Trieb des Stativs, ein Z-Galvanometer, Piezo-Fokus am Objektiv ("PiFoc"), einen Direktantrieb, einen Linearmotor, einen Schrittmotor, einen Ultraschallmotor, einen Ringmotor, einen Mikromotor oder einen Piezotisch umfassen.

Die ein oder mehreren Aktoren 114 können auf eine vorhergesagte Ebene oder Fokusposition eingestellt werden. Das Verfahren zur Bestimmung einer Ebene oder optimalen Fokusposition kann beliebig oft wiederholt werden. Einer der Sensoren 112 kann ein erneutes Bild aufnehmen und das erneute Bild kann mittels des neuronalen Netzes 136 analysiert werden. Basierend auf dem Ergebnis kann ein Aktor eine neue Position einstellen oder es kann bestimmt werden, dass die optimale Position für einen Fokus erreicht wurde. Die Anzahl der Wiederholungen zur Bestimmung einer optimalen Fokusposition kann durch ein Abbruchkriterium bestimmt werden. Beispielsweise kann die Richtungsumkehr des Differenzvektors zwischen aktueller und vorhergesagter Fokusposition als Abbruchkriterium genutzt werden.

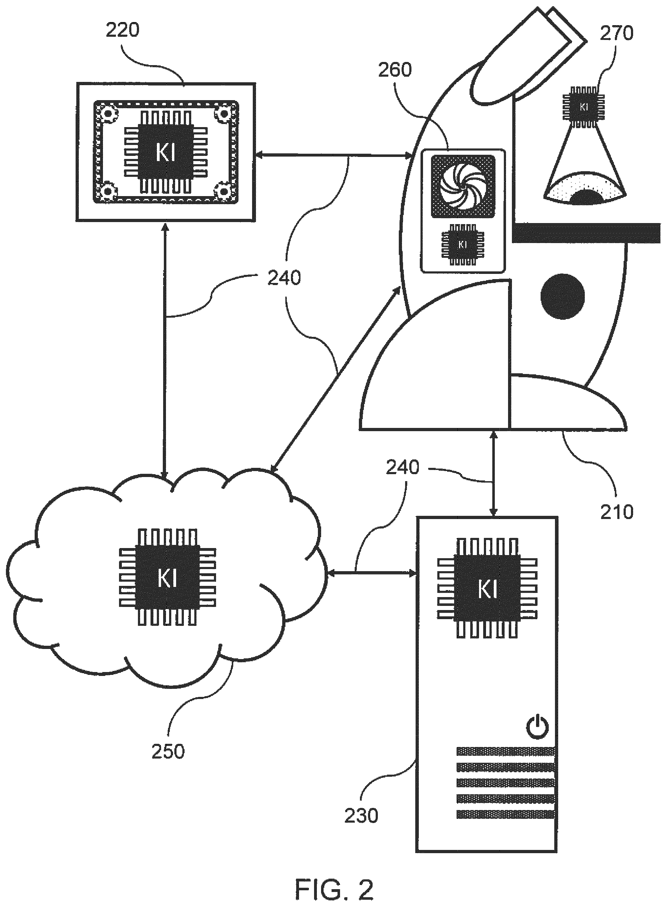

Figur 2 zeigt in einer Ausführungsform eine Kommunikation eines Bildaufnahmesystems 210, beispielsweise eines Mikroskops, mit KI-befähigten Vorrichtungen 220 und 230. Ein einzelnes Mikroskop kann dabei selbst Hardwarebeschleunigung und/oder einen Kleinstrechner umfassen, die es KI-befähigen und die Ausführung von trainierten Modellen (z.B. neuronalen Netzen) ermöglichen. Trainierte Modelle können Deep-Learning-Ergebnis-Netze umfassen. Diese neuralen Netze können Ergebnisse darstellen, wobei diese durch mindestens einen Deep-Learning-Prozess und/oder mindestens einer Deep-Learning-Methode erlernt wurden. Diese neuronalen Netze kondensieren zu einem bestimmten Aufgaben-Ensemble gesammeltes Wissen in geeigneter Weise durch automatisiertes Lernen, derart, dass eine bestimmte Aufgabe fortan automatisiert und mit höchster Qualität durchgeführt werden kann.

Das Mikroskop kann ein oder mehrere Komponenten 260 und 270 umfassen. Verschiedene Komponenten des Mikroskops, wie Aktoren 260 und Sensoren 270 können ihrerseits Klbefähigt sein und Kleinstrechner oder FPGAs umfassen. Das Mikroskop 210 ist ausgestaltet um mit einem Embedded-System 220 und mit einem Steuerrechner 230 zu kommunizieren. In einem Beispiel kommuniziert das Mikroskop 210 gleichzeitig bzw. parallel mit ein oder mehreren Embedded-Systemen 220, die hardwarebeschleunigte KI (künstliche Intelligenz) besitzen, und mit seinem Steuerrechner 230 über bidirektionale Kommunikationsverbindungen 240. Über die bidirektionalen Kommunikationsverbindungen 240, z.B. einen Deep-Learning-Bus, können Daten (wie z.B. Bilder, Geräteparameter, Experimentalparameter, biologische Daten) und Modelle, deren Bestandteile oder versteckte Repräsentationen ("hidden representations") von Daten ausgetauscht werden. Dabei können die Modelle während des Ablaufs eines Experiments verändert werden (durch Training oder Adaptieren von Teilen eines Modells). Außerdem können neue Modelle auf ein Mikroskop oder eine Vorrichtung von einer Cloud 250 geladen und zum Einsatz gebracht werden. Dies kann geschehen aufgrund von Erkennung und Interpretation der Daten, die ein Modell selbst geleistet hat oder durch ein Erfassen von Nutzereingaben.

Für die kontinuierliche Verbesserung von Modellen werden in einer Ausführungsform Daten von möglichst vielen Anwendern erfasst. Die Anwender können Ihre Präferenzen, welche Daten erhoben und anonym verarbeitet werden dürfen, angeben. Außerdem kann es an der für den Ablauf des Experiments richtigen Stelle in der Nutzeroberfläche eine Möglichkeit geben, die Vorhersage von Modellen zu bewerten. In einem Beispiel könnte das System eine Fokusposition bestimmen. Der Anwender hat die Möglichkeit diesen Wert zu überschreiben. Die durch den Anwender überschriebene Fokusposition kann einen neuen Datenpunkt für die Feinjustage eines Modells darstellen, der für ein Training eines Modells zur Verfügung steht. Der Anwender hat somit den Vorteil, dass er immer wieder verbesserte Modelle herunterladen und/oder ausführen kann. Für den Hersteller wiederum öffnet sich die Möglichkeit, sein Angebot beständig zu verbessern, da neue Modelle anhand der Daten von vielen Anwendern entwickelt werden können.

In Figur 2 ist des Weiteren die Kommunikation von Bildaufnahmesystem 210 mit Embeddedrechner 220 oder Systemrechner 230 gezeigt, die sowohl untereinander als auch mit einer Cloud 250 oder einem Server kommunizieren können. Bildaufnahmesystem 210 und deren attachierte Komponenten können untereinander und mit Arbeitsplatzrechnern über ein Deep-Learning-Bussystem kommunizieren. Dazu kann spezialisierte Hardware eingesetzt werden und/oder eine TCP/IP Netzwerkverbindung oder ein Äquivalent. Das Deep-Learning-Bussystem kann folgende Eigenschaften umfassen:
- Vernetzung aller Subsysteme, also Komponenten des Bildaufnahmesystems, Sensoren und Aktoren untereinander und mit geeigneten Modellen. Diese Subsysteme können intelligent sein, also selbst neuronale Netze oder Maschinenintelligenz besitzen, oder nicht intelligent sein.
- Die Vernetzung aller Subsysteme und Module von Bildaufnahmesystemen mit ein oder mehreren Bildaufnahmesystemen ergibt eine Hierarchiestruktur mit Domänen und Subdomänen.
- Alle Domänen und Subdomänen sowie die zugehörigen Systeme und Subsysteme können zentral erfasst und durchsuchbar sein, damit ein Modell-Manager Modelle auf sie verteilen kann.
- Zur Kommunikation bei zeitkritischen Anwendungen kann eine spezialisierte Hardware für das Bussystem verwendet werden. Alternativ kann auch eine Netzwerkverbindung nach TCP/IP oder einem geeigneten Webstandard verwendet werden.
- Das Bussystem verwaltet vorzugsweise die folgenden Daten oder einen Teil davon: ID für jede Komponente (Aktoren, Sensoren, Mikroskope, Mikroskopsysteme, Computerressourcen, Arbeitsgruppen, Institutionen); Rechteverwaltung mit Autor, Institution, Schreib-/Leserechte der ausführenden Maschine, gewünschtes Bezahlsystem; Metadaten aus Experimenten und Modellen; Bilddaten; Modelle und deren Architektur mit gelernten Parametern, Aktivierungen und versteckte Repräsentationen; benötigte Schnittstellen; benötigte Laufzeitumgebung mit Umgebungsvariablen, Bibliotheken etc.; alle weiteren Daten soweit vom Modell-Manager und dem Rechtemanagement benötigt.
- Durch die Vielzahl der unterschiedlichen KI-befähigten Komponenten entsteht eine Hierarchiestruktur mit Domänen und Subdomänen. Alle Komponenten sind in einem Verzeichnis erfasst und auffindbar. Auf jeder Ebene (also dem Mikroskop attachierte Komponente, Mikroskop/-system, Arbeitsgruppe, Computer-Ressourcen, Institution) findet Rechteverwaltung statt. Dadurch entsteht eine logische und hierarchische funktionale Struktur, die die Zusammenarbeit aller Akteure erleichtert.

Das erfindungsgemäße Verfahren und die erfindungsgemäße Vorrichtung zur Bestimmung einer Fokusposition können nach einer Ausführungsform in allen mikroskopischen Aufnahmemodalitäten, insbesondere Weitfeldmikroskopie (mit und ohne Fluoreszenz), Konfokal-Mikroskopie und Lichtblattmikroskopie eingesetzt werden. Als Fokustriebe kommen alle in der Mikroskopie und der Fotografie verwendeten Fokussiermechanismen in Betracht, insbesondere der Z-Trieb des Stativs, Z-Galvanometertische, aber auch Piezotische oder Piezo-Fokussiereinheiten am Objektiv ("PiFoc"). Alternativ kann der Fokustrieb einen Aktor umfassen der Teil eines fokussierfähigen Objektivs ist, wobei das fokussierfähige Objektiv auf Fokus-Technologien ohne Piezo-Antrieb basiert. Als Beleuchtungsmodalitäten kommen in Betracht Durchlichtbeleuchtung, Phasenkontrast, differentieller Interferenzkontrast, Epifluoreszenz. Verschiedene Beleuchtungsmodalitäten können es erforderlich machen, für jede davon ein eigenes neuronales Netz zu trainieren. In diesem Fall würde eine automatische Vorauswahl des geeigneten Modells stattfinden. Zu diesem Zweck können Systemparameter verwendet werden (sog. Bildmetadaten). Alternativ dazu wird ein weiteres neuronales Netz zur Bildklassifizierung eingesetzt. Dieses verwendet den zum Fokussieren verwendeten Bilderstapel und macht eine Vorhersage über die Beleuchtungsmodalität, z.B. Durchlicht, Phasenkontrast, etc.

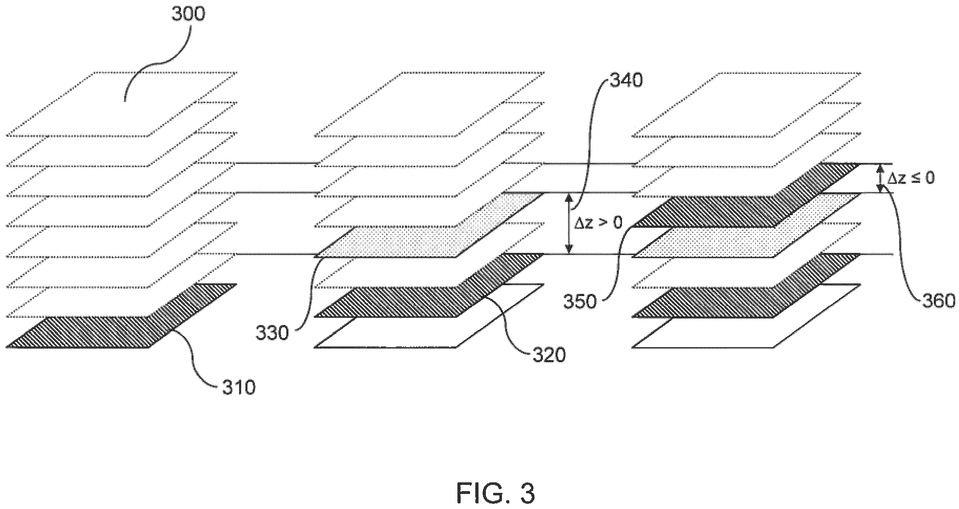

Figur 3 zeigt eine schematische Darstellung zur Funktionsweise der Bestimmung einer Fokusposition nach einer Ausführungsform. Das erfindungsgemäße Verfahren kann zum Auffinden einer Probenebene am Anfang eines Experiments genutzt werden.

In einem ersten Schritt können ein erstes Bild 310 und ein zweites Bild 320 aufgenommen werden. Die Bilder 310 und 320 können im Abstand der axialen Auflösung des verwendeten Objektivs aufgenommen werden. Das erste Bild 310 und/oder das zweite Bild 320 werden dann mittels eines trainierten Modells analysiert und es wird eine Vorhersage 340 über eine Position getroffen. Die Vorhersage 340 (Δz, in dem eingezeichneten Fall Δz > 0) besteht in der Differenz aus dem zuletzt aufgenommenen und/oder dem analysierten Bild 320 und der vom Modell vorhergesagten Fokusposition 330. In einer Ausführungsform kann diese Position mit einem Fokustrieb angefahren werden. Von dort aus kann ein weiteres Bild 350 im Abstand der axialen Auflösung des verwendeten Objektivs aufgenommen werden. Das weitere Bild 350 kann dann wieder mittels des trainierten Modells analysiert werden um für die neue angefahrene Position eine weitere Vorhersage 360 zu treffen. Ist das vorhergesagte Delta (Δz ≤ 0) der weiteren Vorhersage 360 negativ, wie in Figur 3 zu sehen, wurde die korrekte Fokusposition 330 bereits gefunden. Anderenfalls kann das Verfahren fortgeführt werden, bis die korrekte Position gefunden wird.

Die korrekte Position kann in beide Richtungen der axialen Achse überprüft werden. Beispielsweise kann jeweils ein Bild, beispielsweise im Abstand der axialen Auflösung des verwendeten Objektivs oder einem vordefinierten Abstand, in die eine und die andere Richtung entlang der optischen Achse um eine vorhergesagte Position aufgenommen werden. Diese können wieder mit Hilfe des trainierten Modells analysiert werden. Wurde die korrekte Position gefunden sollte so eine Vorhersage von einem Bild ein positives Delta und eine Vorhersage von dem anderen Bild aus der entgegengesetzten Richtung ein negatives Delta liefern.

In einer Ausführungsform, die nicht in den Schutzbereich der Ansprüche fällt aber hilfreich für das Verständnis der Erfindung ist, arbeitet die erfindungsgemäße Vorrichtung in zwei verschiedenen Modi. Im Modus I wird eine Ebene, in der eine Probe sichtbar oder scharf gestellt ist, ohne Zutun des Anwenders gefunden. Im Modus II kann der Nutzer eine Feinjustage des Fokus für seinen Anwendungsfall vornehmen, um noch genauere Ergebnisse oder einem Bereich mit einem höchsten Informationsgehalt in den erfassten Bildern zu erreichen.

Neben dem grundsätzlichen Training, das in einer Cloud oder der Entwicklung ablaufen kann, kann das Modell aus "Erfahrung" lernen. Dabei kann der Anwender einen seiner Meinung nach optimalen Fokus bestimmen und dem System diesen mitteilen. Übertragen werden in diesem Fall der zum Fokussieren verwendete Bilderstapel samt Metadaten (Informationen zu Bildaufnahmemodalitäten, Beleuchtung, etc.), sowie die vom Anwender bestimmte Fokusposition. Beide stellen neue Wertepaare Xᵢ und yᵢ dar, die dem Trainingsdatensatz hinzugefügt werden können. In einer erneuten kurzen Trainingsrunde ("Fine-Tuning") kann das Modell seine Vorhersagegenauigkeit verbessern und Arten von Proben und Beleuchtungsmodalitäten lernen. Geschieht dies beim Hersteller oder in der Cloud, kann der Anwender ein neues Modell herunterladen. Dies kann automatisch geschehen. In einem Ausführungsbeispiel kann der Anwender oder die erfindungsgemäße Vorrichtung das Training zum Fine-Tuning selbst durchführen. Der Hersteller kann ein System zur Verwaltung von Kundendaten verwenden, das anwenderspezifische Daten zum Fine-Tuning speichert. Dadurch kann der Hersteller auch kundenspezifische neuronale Netze anbieten. Der Hersteller kann eine E-Mail, soziale Medien oder Push-Nachrichten verwenden, um den Anwender über die Verfügbarkeit neuer trainierter neuronaler Netze zu informieren. Der Hersteller kann solche auch über einen App-Store weiteren Kunden anbieten.

In einem Ausführungsbeispiel, die nicht in den Schutzbereich der Ansprüche fällt aber hilfreich für das Verständnis der Erfindung ist, kann das Einverständnis eines Kunden zum Speichern seiner Bilddaten eingeholt werden. Anstelle der originalen Bilddaten kann auch eine Transformation der Daten gespeichert werden. Die Bilddaten werden dazu durch einen Teil des neuronalen Netzes verarbeitet und in einen "Feature-Raum" übertragen. Dieser weist typischerweise eine geringere Dimensionalität als die Originaldaten auf und kann als eine Form der Datenkompression angesehen werden. Das Originalbild kann durch genaue Kenntnis der Version des neuronalen Netzes und seiner Parameter rekonstruiert werden.

In einer Ausführungsform kann eine Fokusposition auf Basis einer Analyse von nur einem einzigen Bild 320 bestimmt werden. Dieses Bild 320 kann aufgenommen werden und basierend auf einer Analyse des aufgenommenen Bildes 320 mittels eines trainierten Modells kann eine Vorhersage getroffen werden. Dies ermöglicht eine Sprungvorhersage zu einer optimalen Fokusposition 330. Das System "springt" direkt zu der vorhergesagten Fokusposition oder einer Position entlang der optischen Achse (Z-Position) ohne im herkömmlichen Sinne zu fokussieren. Das dabei verwendete Ausgangsbild kann unscharf sein, sich also außerhalb des Fokus befinden. Im Falle von einem beliebigen konfokalen Bild, welches ja per Definition im "Fokus" ist, kann eine Ebene entlang der optischen Achse, beispielsweise eine z-Ebene, mit einer gesuchten Information vorhergesagt werden. Das dabei verwendete Bild muss dabei keine der gesuchten Informationen enthalten, allerdings muss das Bild zu einem Kontext passen, welcher ein Teil des verwendeten Lemmodels ist.

Durch Verwendung eines einzelnen Bildes ergeben sich auch erweiterte Anwendungen. Dazu gehören die Nachfokussierung in Zeitstapeln oder Anwendungen in Fokuskarten. Eine Fokuskarte besteht aus einem Satz von Raumkoordinaten in lateraler (Tischposition) und axialer Richtung (Z-Trieb). Basierend auf einer oder mehr Fokuspositionen in einer Fokuskarte können benachbarte Fokuspositionen in der Fokuskarte vorhergesagt werden. Dadurch genügt eine geringere Anzahl von Stützpunkten in einer Fokuskarte, um dieselbe Genauigkeit zu erreichen wie bei bisherigen Verfahren. Die Fokuskarte kann dadurch auch dynamisch veränderlich und immer genauer werden je mehr Stützpunkte nach einem Aufnahmefortschritt vorliegen. In einem nächsten Schritt kann dies verwendet werden, um eine gekrümmte Oberfläche in einem 3D-Raum automatisch zu ermitteln. Dies kann bei großen Proben dazu dienen die informativen Raumelemente zu erfassen und spart damit Aufnahmezeit und Speicherplatz.

Das verwendete trainierte Modell oder Lernmodell kann auf Deep-Learning-Verfahren basieren um die gewünschte Sprungvorhersage der Fokusposition oder einer Z-Ebene im Fokus (bei nicht konfokalen Abbildungsverfahren), oder eine Ebene mit der gewünschten Information (bei konfokalen Abbildungsverfahren) auf der Basis von einem oder wenigen Bildern zu ermitteln. Herkömmliche bildbasierte Verfahren müssen immer einen vollständigen Bilderstapel in axialer Richtung aufnehmen und analysieren. Dies ist zeit- und rechenaufwendig und kann bei bestimmten Messungen Proben beschädigen.

Die Vorhersage der optimalen Fokusposition kann durch ein tiefes, konvolutionales neuronales Netzwerk (engl. "convolutional neural network" oder CNN) erfolgen, welches einer Form von Deep-Learning entspricht. Das Modell wird auf zweierlei Arten verwendet: 1) Es "lernt", optimale Fokuspositionen vorherzusagen anhand eines Trainingsdatensatzes und 2) Es sagt Fokuspositionen vorher bei einem vorhandenen Bilderstapel oder einem einzigen Bild. Ersteres wird als Training (im Englischen als "supervised training") bezeichnet und letzteres als Inferenz. Das Training kann in einer Cloud oder einem Computer, der für das Training von neuronalen Netzen ausgestaltet ist stattfinden. Die Entwicklung oder das Training der neuronalen Netze kann bei einer dritten Person oder lokal stattfinden. Ein Trainieren kann auch durch herkömmliche Autofokusverfahren automatisch erfolgen mit einer oder mehreren geeigneten Kalibrationsproben, wobei die eine oder mehreren Kalibrationsproben dem späteren Einsatzzweck, das heißt, der später zu untersuchenden Probenart, angepasst sind. Die Inferenz kann beim Anwender stattfinden. In einer Ausführungsform kann aber auch der Anwender durch erneutes, weniger umfangreiches Training ein Modell oder neuronales Netz verbessern. Dies wird als "Fine-Tuning" bezeichnet.

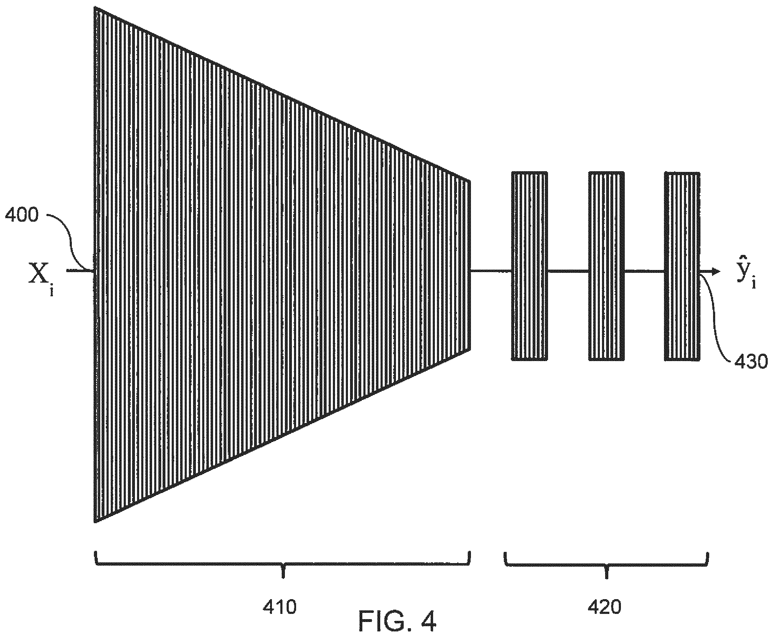

In Figur 4 ist eine schematische Darstellung eines trainierten Modells zu sehen. Daten 400, die in das Modell eingegeben werden, können Bilddaten und/oder Metadaten umfassen. Das trainierte Modell kann aus den Eingangsdaten eine Vorhersage 430 über die Position eines Fokus oder den Abstand zur korrekten Fokusposition treffen.

Das Training eines Modells besteht darin, zu vorhandenen Eingabewerten X, wie beispielsweise Bilddaten oder Metadaten, solche inneren Modellparameter (beispielsweise Gewichte W und/oder Schwellenwerte B) zu finden, die eine optimale Vorhersage der Ausgabewerte ŷᵢ ergeben. Die Soll-Ausgabewerte yᵢ sind für das Training bekannt. In dieser Anwendung sind X, W und B als Tensoren zu sehen, während ŷᵢ ein Skalar sein kann. Zum Beispiel kann ŷᵢ die Fokusposition des Z-Triebs sein oder ein Wert, der im Zusammenhang mit einer Fokusposition steht und diese eindeutig identifiziert (beispielsweise ein relativer Abstand Δz zur aktuellen Bildposition). In einem Ausführungsbeispiel kann eine Vorhersage, wie in Figur 3 gezeigt, basierend auf einem Z-Stapel von aufgenommenen Bildern gemacht werden. Die vorhergesagte Fokusposition wird an den Z-Trieb eines Mikroskops weitergegeben und das Mikroskop entsprechend eingestellt.

Das Modell setzt sich aus zwei funktional unterschiedlichen Teilen zusammen. Der erste Teil 410 des Modells berechnet eine pyramidal hierarchisch angeordnete Kaskade von Konvolutionen mit jeweils darauffolgender Nichtlinearität und Dimensionsreduktion. Die Parameter für die Konvolution werden beim Training des trainierten Modells erlernt. Somit "lernt" das Modell beim Training eine versteckte Repräsentation der Daten, die als Datenkompression, sowie auch als Extraktion von Bildmerkmalen verstanden werden kann.

Der zweite Teil 420 des Modells ordnet und gewichtet die extrahierten Bildmerkmale. Dies ermöglicht eine möglichst genaue Vorhersage, wie beispielsweise einer Fokusposition. Das Training der Bildmerkmalsextraktion 410 ist zeit- und rechenaufwendig, im Gegensatz zum Training der Gewichtung der Bildmerkmale 420. Dieser letzte Teil des Modells kann mit einem geringen Aufwand lokal trainiert werden (Fine-Tuning). Das Fine-Tuning kann durch Nutzereingaben eines Anwenders und/oder automatisch ausgelöst werden. Zum Beispiel kann ein Anwender eine durch ein trainiertes Modell vorhergesagte Fokusposition überschreiben. Wenn der Anwender eine Fokusposition überschreibt, kann davon ausgegangen werden, dass der Anwender mit der Vorhersage nicht zufrieden ist oder er auf einen anderen Bereich oder ein anderes Objekt scharfstellen möchte. Ein weiteres Beispiel ist, dass ein klassisches oder ein zweites Autofokussystem automatisiert eine Fokusposition findet, die von der vom System vorhergesagten Fokusposition abweicht. In diesem Fall kann das zweite Autofokussystem die vorhergesagte Fokusposition überschreiben. Das Fine-Tuning in diesen und ähnlichen Fällen erfolgt automatisch und verbessert die Vorhersagegenauigkeit bei dieser Anwendung. Durch das Fine-Tuning kann der einzelne Anwender schnell und lokal die Genauigkeit von Vorhersagen eines trainierten Modells verbessern. Der Anwender kann seine Daten zur Verfügung stellen. Über eine Netzwerkanbindung können Daten, wie beispielsweise die überschriebene Fokusposition und die zugehörigen Bilddaten sowie Metadaten in eine Cloud hochgeladen werden. In der Cloud können Modelle mittels der Daten trainiert und/oder verbessert werden. Insbesondere der Teil zur Bildmerkmalsextraktion 410 profitiert davon. Die trainierten Modelle in der Cloud können durch eine Vielzahl von Anwendern über die Cloud verbessert werden. In der Cloud können Daten aus verschiedenen Quellen oder von verschiedenen Nutzern aggregiert und für ein Training verwendet werden.

Modelle können in der Cloud auf spezielle Anwendungen trainiert werden. Werden Bilddaten mit hoher Variabilität aufgenommen, müssen Modelle sehr allgemein trainiert werden. Dies kann zu Fehlern oder Ungenauigkeiten führen. Ein Beispiel für Bilddaten mit einer hohen Variabilität ist der Einsatz von Mikroskopen in der Grundlagenforschung oder klinischen Anwendung, wo sich Bilddaten und andere Datentypen stark unterscheiden. Hier kann es zweckmäßig sein, einen vorgelagerten Klassifizierungsschritt mit einem "Mastermodell" vorzunehmen und das richtige Modell für die entsprechende Datendomäne automatisch auszuwählen. Dieses Prinzip, ein hierarchisches Ensemble von Modellen zu verwenden, ist nicht auf eine Datendomäne beschränkt, sondern kann unterschiedliche Datentypen und Domänen umfassen. Ebenso können mehrere hierarchisch organisierte Modellensembles kaskadiert werden um Datendomänen nach mehreren Dimensionen zu ordnen und trotz unterschiedlicher Anwendungen und Variabilität in den Daten eine automatische Inferenz durchführen zu können.

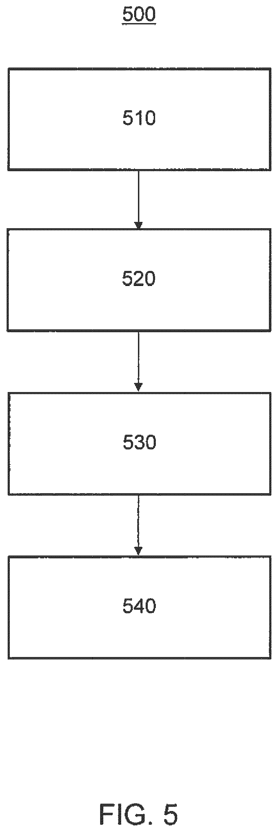

Figur 5 zeigt eine schematische Darstellung eines Flussdiagramms eines erfindungsgemäßen Verfahrens 500 zur Bestimmung einer Fokusposition. Das Verfahren 500 umfasst einen ersten Schritt 510, in welchem mindestens ein erstes Bild aufgenommen wird. Bilddaten des mindestens einen aufgenommenen ersten Bildes hängen von mindestens einer ersten Fokusposition bei der Aufnahme des mindestens einen ersten Bildes ab. Das mindestens eine erste Bild kann mittels einer Vorrichtung die ein optisches System und einen Sensor umfasst aufgenommen werden. In Ausführungsbeispielen umfasst die Vorrichtung zur Aufnahme von Bildern ein Mikroskop oder Mikroskopsystem, eine Digitalkamera, ein Smartphone, ein Tablet, oder einen Computer mit Kamera. Im speziellen kann das erfindungsgemäße Verfahren im Bereich der Weitfeldmikroskopie (mit und ohne Fluoreszenz), der Konfokal-Mikroskopie und der Lichtblattmikroskopie eingesetzt werden.

In einem zweiten Schritt 520 wird eine zweite Fokusposition bestimmt. Dies umfasst ein Analysieren des mindestens einen aufgenommenen ersten Bildes mittels eines trainierten Modells oder neuronalen Netzes. Basierend auf der Analyse oder einer Vorhersage aus der Analyse kann dann die zweite Fokusposition bestimmt werden.

In einem dritten Schritt 530 kann eine Vorrichtung auf die zweite Fokusposition eingestellt werden. Dies kann mittels eines Fokustriebs an der Vorrichtung zur Aufnahme von Bildern geschehen. Abhängig von der Vorrichtung kann beispielsweise ein optisches System relativ zu einem Sensor entlang einer optischen Achse verschoben werden um eine Fokusposition zu ändern und/oder die Vorrichtung auf die bestimmte Fokusposition aus Schritt 520 einzustellen. Alternativ, oder auch zusätzlich, können auch das optische System und der Sensor, gemeinsam mit gleichbleibendem Abstand, entlang einer optischen Achse verschoben werden, so dass sich der Fokuspunkt relativ zu einem betrachteten Objekt verschiebt. Beispielsweise kann ein Mikroskop einen Probentisch in einer Richtung, die beispielsweise der optischen Achse des Mikroskops entspricht, verfahren. So lässt sich eine gewünschte Ebene einer Probe in die Schärfeebene bringen oder die Schärfeeben in eine gewünschte Ebene einer Probe oder eines Objektes verfahren.

Ein weiterer Schritt 540 kann ein Aufnehmen mindestens eines zweiten Bildes mit der zweiten Fokusposition umfassen. Bilddaten des mindestens einen zweiten Bildes können ein oder mehrere Objekte schärfer abbilden als Bilddaten des mindestens einen ersten Bildes. Das Verfahren 500 kann auf Objekte fokussieren, die in einem Kontext mit dem Training oder den Trainingsdaten eines neuronalen Netzes oder trainierten Modells stehen. Dadurch ist das Verfahren 500 nicht auf bestimmte Bildbereiche zur Fokussierung limitiert. Anstelle von Fokussiersystemen die auf nahe oder große Objekte fokussieren, kann das Verfahren 500 Objekte identifizieren und auf diese fokussieren. Dies kann unabhängig von der Position eines Objektes oder der Größe eines Objektes im Bild geschehen. In einer Ausführungsform basiert das Bestimmen der Fokusposition auf den Informationen der Bilddaten die in einem Kontext mit dem Training oder den Trainingsdaten eines neuronalen Netzes oder trainierten Modells stehen.

Im Fokus ist jener Punkt eines optischen Abbildungssystems, in dem sich alle parallel zur optischen Achse einfallenden Strahlen schneiden. Ein Bild, welches in der Schärfeebene eines optischen Abbildungssystems aufgenommen wird, kann die kontrastreichsten Strukturen aufweisen. Ein Bereich höchster Information kann mit der Fokusebene übereinstimmen. Dies ist aber nicht erforderlich. Der Bereich höchster Information ist der vom Betrachter eines Bildes gewünschte Bereich in der der Betrachter die für sich (subjektiv) höchste Information von "Etwas" empfindet. "Etwas" meint dabei eine bestimmte bildliche Struktur, z.B. kann der Betrachter eines Bildes nach "kleinen grünen Kreisen mit einem gelben Punkt" suchen und dann jenen Bereich eines Bildes, der diese gesuchte Struktur enthält, als Bereich höchster Information empfinden.

Mehrere Formen von Feedback können ein Verfahren und eine Vorrichtung zur Bestimmung einer Fokusposition verbessern. Dies kann während einer Messung oder Aufnahme von Bildern geschehen. Es lassen sich zwei Formen von Feedback unterscheiden. Beide Formen von Feedback umfassen eine Adaption des trainierten Modells.
1) Gemäß der Erfindung handelt es sich bei der ersten Form um ein Feedback in das Modell hinein: Da die Modelle beständig weiter feinjustiert ("Fine-Tuning") werden können und ihre Vorhersagegenauigkeit dadurch immer weiter verbessert wird, entsteht ein Feedback, das das Modell, welches die Daten laufend bewertet, selbst noch zur Laufzeit eines Experiments oder einer Messung verändern und verbessern kann.

Beim Feedback kann ein Ensemble von Methoden oder Verfahren derart gestaltet sein, dass mittels Deep-Learning gefundene Ergebnisse auf dem Mikroskopie-System, auf Mikroskopie Sub-Systeme oder andere Vorrichtungen zur Bilderfassung zurückwirken, derart, dass eine Art Rückkopplungsschleife entsteht. Das System wird durch die Rückkopplung asymptotisch in einen optimalen und stabilen Zustand überführt oder adaptiert sich geeignet (Systemeinstellungen) um bestimmte Objekte optimaler aufnehmen zu können.

In einer Ausführungsform, die nicht in den Schutzbereich der Ansprüche fällt aber hilfreich für das Verständnis der Erfindung ist, werden zur Optimierung eines Autofokusverfahrens, bestehend aus den Schritten 510 und 520, Daten erfasst. Das Erfassen dieser Daten kann den Prozess zur Optimierung des Autofokusverfahrens auslösen. Das Erfassen der Daten kann ein Erfassen eines dritten Bildes umfassen, wobei das dritte Bild Bilddaten, die von einer nutzerdefinierten Fokusposition abhängen, umfassen kann. Die nutzerdefinierte Fokusposition kann hierbei von der zweiten Fokusposition abweichen, wodurch davon ausgegangen werden kann, dass ein Anwender mit der vom trainierten Modell vorgeschlagenen Fokusposition nicht zufrieden ist und/oder eine Optimierung des Autofokusverfahrens erforderlich ist. Der Anwender kann beispielsweise auf einen Bereich im Bild fokussieren, der für ihn die höchste oder wichtigste Information enthält. Die Optimierung des Autofokusverfahrens kann somit durch eine Optimierung des trainierten Modells erreicht werden.

Die erfassten Daten können das erfasste dritte Bild, und eine Repräsentation der Abweichung von der zweiten Fokusposition von der nutzerdefinierten Fokusposition und/oder eine Repräsentation der nutzerdefinierten Fokusposition umfassen. Außerdem kann das dritte Bild markiert werden. Da die nutzerdefinierte Fokusposition einer gewünschten Fokusposition entspricht, kann das zur nutzerdefinierten Fokusposition zugehörige erfasste dritte Bild als Soll-Zustand für ein Training anhand der erfassten Daten markiert werden.

In einer Ausführungsform kann ein Nutzer aktiv nach weiteren Daten für die Optimierung eines Modells gefragt werden. Der Anwender kann diese Daten dann markieren. Markieren bedeutet dabei eine Bewertung des Anwenders derart, dass er dem System mitteilt welche Z-Position er als "im Fokus" oder als "richtig" bewertet oder welche Fokusposition gewünschte Objekte scharf abbildet. Auf diese Weise können die weiteren Daten durch die Bedienung an der Vorrichtung zur Aufnahme von Bildern entstehen und als Trainingsdaten verwendet werden. Bilder, welche vom Anwender als "im Fokus" bewertet werden, bekommen dabei das Label "im Fokus". Danach kann eine Aufnahme einer Bilderserie um diesen nutzerdefinierten Fokuspunkt erfolgen. In Abhängigkeit der erfassten Daten und der nutzerdefinierten Fokusposition kann also ein Bilderstapel aufgenommen oder erfasst werden. Die Bilddaten jedes Bildes des Bilderstapels können von einer Fokusposition abhängen, die einen bekannten Abstand zu der nutzerdefinierten Fokusposition hat.

Basierend auf den erfassten Daten kann das verwendete Modell feinjustiert werden. Dies kann ein Trainieren eines Teils des trainierten Modells umfassen. Zum Beispiel kann nur der Teil 420 aus Figur 4 trainiert werden. Dies kann durch eine neue Auswahl von inneren Modellparametern lokal erfolgen. Somit kann durch eine Optimierung eines trainierten Modells das gesamte Autofokusverfahren optimiert werden.

Zusätzlich können auch noch Metadaten erfasst werden, um die erfassten Daten zu klassifizieren. Dies ermöglicht es einen Anwendungsbereich für das trainierte Modell festzulegen. Die Metadaten können Informationen zu Bildaufnahmemodalitäten, wie Hellfeldbeleuchtung, Epifluoreszenz, Differentieller Interferenzkontrast oder Phasenkontrast, Informationen zu einer Beleuchtung, Informationen zu einer Probe, Informationen zu einem Objekt, Informationen zu Systemparametern einer Vorrichtung zum Erfassen von Bildern, Informationen zu Bildaufnahmeparametern, wie Intensität der Leuchtquelle(n), Verstärkung am Fotosensor, Abtastrate, Kontextinformationen und Informationen zu Objektivparametern, wie die axiale Auflösung des Objektivs, umfassen. Kontextinformationen können in einem Zusammenhang mit den erfassten Daten stehen. Beispielsweise können Kontextinformationen Schlagworte oder Erklärungen zu einem Experiment in Zusammenhang mit den erfassten Daten umfassen und verwendet werden um die Daten zu klassifizieren.

2) Die zweite Form des Feedbacks, die nicht in den Schutzbereich der Ansprüche fällt aber hilfreich für das Verständnis der Erfindung ist, basiert auf Bilderkennung und/oder Bewertung von aufgenommenen Daten. Es können Modelle zur Laufzeit ausgetauscht und nachgeladen werden, um andere Objekttypen, andere Färbungen und generell andere Anwendungen zu unterstützen. Dies kann sogar während der Laufzeit eines Experiments oder einer Messung geschehen, wodurch das Mikroskop sehr dynamisch und anpassungsfähig wird. Dies umschließt auch den Fall, dass sich die zu untersuchende Probe selbst während des Experiments substantiell verändert, was eine Anpassung des Modells oder den vollständigen Austausch des Modells während der Laufzeit des Experiments erfordert. Beispielsweise kann ein "Master"- oder Weltmodell eine Klassifizierung des Einsatzgebiets vornehmen und geeignete Modelle automatisch auswählen, die dann ausgeführt werden.

Der Einsatz und die beständige Verbesserung prädiktiver Modelle, die in den Messungen von Mikroskopen oder anderen Vorrichtungen zur Erfassung von Bildern eingesetzt werden und dort Vorhersagen machen (Inferenz) und ggf. feinjustiert werden können, vorteilhaft durch Training nur weniger Knoten im neuronalen Netzwerk, optimiert Verfahren zur Bestimmung von Fokuspositionen und erweitert den Anwendungsbereich von Modellen in Vorrichtungen zur Erfassung von Bildern, wie beispielsweise Mikroskopen. Anwendungsbereiche der Inferenz durch diese Modelle sind vielfältig und umfassen beispielsweise die Automatisierung von Mikroskopen oder von experimentellen Abläufen, ganz oder teilweise, wie zum Beispiel dem Finden von Objekten und der Bestimmung oder Einstellung von einer optimalen Fokusposition.

### Bezugszeichen:

- 100: System
- 110: Bildaufnahmevorrichtung
- 112: ein oder mehrere Sensoren
- 114: ein oder mehrere Aktoren
- 120: Nutzerschnittstelle
- 122: Regler
- 124: Software-Nutzerschnittstelle
- 130: Computer
- 132: ein oder mehrere Prozessoren
- 134: ein oder mehrere flüchtige Speichermedien
- 136: Neuronales Netz
- 138: ein oder mehrere Speichermedien
- 140: Netzwerkanbindung
- 150: Cloud
- 152: KI-Komponente
- 210: Mikroskop
- 220: Embedded-Computer
- 230: Systemrechner
- 240: bidirektionale Kommunikationsverbindungen
- 250: Cloud
- 260: Aktor
- 270: Sensor
- 300: Bilderstapel
- 310, 320, 350: aufgenommene Bilder
- 330: korrekte Fokusposition
- 340, 360: Vorhersage
- 400: Modelleingang
- 410, 420: Teile des neuronalen Netzes
- 430: Modellausgabe
- 500: Verfahren
- 510 - 540: Verfahrensschritte

## Patentansprüche

1. Verfahren (500) zur Bestimmung einer Fokusposition, mit den Schritten:
- Aufnehmen (510) mindestens eines ersten Bildes (310, 320), wobei Bilddaten des mindestens einen aufgenommenen ersten Bildes (310, 320) von mindestens einer ersten Fokusposition bei der Aufnahme des mindestens einen ersten Bildes abhängen;
- Bestimmen (520) einer zweiten Fokusposition (340) basierend auf einer Analyse des mindestens einen aufgenommenen ersten Bildes (310, 320) mittels eines trainierten Modells (136); und
- Aufnehmen (540) mindestens eines zweiten Bildes (330) mit der zweiten Fokusposition (340),
wobei das mindestens eine erste Bild (310, 320) und das mindestens eine zweite Bild (330) Informationen enthalten, die in einem Kontext mit einem Training des trainierten Modells (136) stehen, wobei mindestens ein Objekt von ein oder mehreren Objekten, die in einem oder mehreren des mindestens einen aufgenommenen ersten Bildes abgebildet werden, in dem mindestens einen aufgenommenen zweiten Bild schärfer abgebildet werden als in dem mindestens einen aufgenommenen ersten Bild, wobei das mindestens eine Objekt in einem Kontext mit einem Training des trainierten Modells steht, **dadurch gekennzeichnet, dass** das trainierte Modell durch Feedback adaptiert wird, das das Modell, welches die Bilddaten laufend bewertet, zur Laufzeit eines Experiments oder einer Messung verändert.

2. Verfahren nach Anspruch 1, **gekennzeichnet dadurch, dass** das mindestens eine erste Bild (310, 320) mit einer niedrigeren Auflösung aufgenommen wird als das mindestens eine zweite Bild (330).

3. Verfahren nach einem der Ansprüche 1 und 2, **gekennzeichnet dadurch, dass** das mindestens eine aufgenommene erste Bild (310, 320) ein oder mehrere Objekte abbildet, wobei das mindestens eine aufgenommene zweite Bild (330) mindestens eines der ein oder mehreren Objekte schärfer abbildet als das mindestens eine aufgenommene erste Bild (310, 320).

4. Verfahren nach einem der Ansprüche 1 bis 3, **gekennzeichnet dadurch, dass** die zweite Fokusposition während einer Messung bestimmt wird, und/oder
die mindestens eine erste Fokusposition entlang einer optischen Achse zu der zweiten Fokusposition verschoben ist.

5. Verfahren nach einem der Ansprüche 1 bis 4, **gekennzeichnet dadurch, dass** die mindestens eine erste Fokusposition mindestens einer ersten Schärfeebene entspricht und die zweite Fokusposition einer zweiten Schärfeebene entspricht, wobei die zweite Schärfeebene annähernd mit einer Objektebene übereinstimmt.

6. Verfahren nach einem der Ansprüche 1 bis 5, **gekennzeichnet dadurch, dass** das Verfahren des Weiteren folgenden Schritt umfasst:
- Einstellen (530) einer Vorrichtung auf die zweite Fokusposition, wobei die Vorrichtung ein optisches System und einen Sensor umfasst.

7. Verfahren nach Anspruch 6, **gekennzeichnet dadurch, dass**
das Einstellen der Vorrichtung (110; 210) auf die zweite Fokusposition ein Verschieben des optischen Systems relativ zu dem Sensor umfasst, und/oder
das Einstellen der Vorrichtung auf die zweite Fokusposition ein Verschieben des optischen Systems und des Sensors (112) relativ zu einem Objekt umfasst.

8. Verfahren nach einem der Ansprüche 1 bis 7, **gekennzeichnet dadurch, dass** das Verfahren des Weiteren den Schritt des Erfassens von Daten umfasst, optional wobei ein Anwendungsbereich für das trainierte Modell durch Metadaten zur Klassifikation der erfassten Daten festgelegt wird, wobei die Metadaten Kontextinformationen umfassen, die Schlagworte oder Erklärungen zu einem Experiment in Zusammenhang mit den erfassten Daten umfassen und verwendet werden, um die erfassten Daten zu klassifizieren.

9. Verfahren nach einem der Ansprüche 1 bis 8, **gekennzeichnet dadurch, dass** das trainierte Modell (136) auf ein oder mehreren neuronalen Netzen oder ein oder mehreren Deep-Learning-Ergebnis-Netzen basiert und/oder
aus einer Vielzahl von Modellen ausgewählt wurde, wobei
die Vielzahl von trainierten Modellen durch ein Einsatzgebiet klassifiziert ist,
jedes der Vielzahl von trainierten Modellen in bestimmter Weise trainiert wurde,
die Vielzahl von trainierten Modellen hierarchisch organisiert ist, und/oder einzelne trainierte Modelle aus der Vielzahl von trainierten Modellen auf einzelne Typen von Proben, Experimente, Messungen oder Geräteeinstellungen spezialisiert sind.

10. Vorrichtung (130; 210, 220, 230) zur Bestimmung einer Fokusposition, umfassend:
ein oder mehrere Prozessoren (132);
ein oder mehrere computerlesbare Speichermedien (138), auf denen computerausführbare Anweisungen gespeichert sind, die, wenn sie von dem einen oder den mehreren Prozessoren (132) ausgeführt werden, bewirken, dass
mindestens ein Sensor (112) mindestens ein erstes Bild (310, 320) erfasst, wobei Bilddaten des mindestens einen erfassten ersten Bildes (310, 320) von mindestens einer ersten Fokusposition bei der Erfassung des mindestens einen ersten Bildes abhängen;
eine zweiten Fokusposition bestimmt wird, wobei die zweite Fokusposition basierend auf einer Analyse des mindestens einen erfassten ersten Bildes (310, 320) mittels eines trainierten Modells (136) bestimmt wird; und
mindestens ein zweites Bild (330) mit der zweiten Fokusposition (340) aufgenommen wird,
wobei das mindestens eine erste Bild (310, 320) und das mindestens eine zweite Bild (330) Informationen enthalten, die in einem Kontext mit einem Training des trainierten Modells (136) stehen,
wobei mindestens ein Objekt von ein oder mehreren Objekten, die in einem oder mehreren des mindestens einen aufgenommenen ersten Bildes abgebildet werden, in dem mindestens einen aufgenommenen zweiten Bild schärfer abgebildet werden als in dem mindestens einen aufgenommenen ersten Bild, wobei das mindestens eine Objekt in einem Kontext mit einem Training des trainierten Modells steht, **dadurch gekennzeichnet, dass** das trainierte Modell durch Feedback adaptiert wird, das das Modell, welches die Bilddaten laufend bewertet, zur Laufzeit eines Experiments oder einer Messung verändert.

11. Bildaufnahmesystem (100) zum Einstellen einer Fokusposition, umfassend:
die Vorrichtung (130; 210, 220, 230) nach Anspruch 10;
den mindestens einen Sensor (112; 270);
ein optisches System, das ausgestaltet ist um ein oder mehrere Objekte auf einen des mindestens einen Sensors (112; 270) abzubilden; und
mindestens einen Aktor (114; 260), wobei der mindestens eine Aktor (114; 260) ausgestaltet ist das Bildaufnahmesystem (100) auf die zweite Fokusposition einzustellen.

12. Bildaufnahmesystem nach Anspruch 11, **gekennzeichnet dadurch, dass** der mindestens eine Aktor (114; 260) mindestens eines der folgenden umfasst: einen Z-Trieb eines Stativs, ein Z-Galvanometer, einen Piezo-Fokus an einem Objektiv des optischen Systems, einen Direktantrieb, einen Linearmotor, einen Schrittmotor, einen Ultraschallmotor, einen Ringmotor, einen Mikromotor, und einen Piezo-Tisch, und/oder
dass der mindestens eine Aktor (114; 260) Teil eines fokussierfähigen Objektivs ist, wobei das fokussierfähige Objektiv auf Fokus-Technologien ohne Piezo-Antrieb basiert.

13. Bildaufnahmesystem nach einem der Ansprüche 11 bis 12, **gekennzeichnet dadurch, dass** das Bildaufnahmesystem eine Digitalkamera, einen tragbaren Computer mit Kamera, oder ein Mikroskop (210) oder Mikroskopsystem umfasst, und/oder
die Vorrichtung (130; 210, 220, 230) Teil eines Mikroskops (210) oder Mikroskopsystems ist.

## Claims

1. A method (500) for determining a focus position, with the steps:
- recording (510) at least one first image (310, 320), wherein image data of the at least one recorded first image (310, 320) depend on at least one first focus position when recording the at least one first image;
- determining (520) a second focus position (340) based on an analysis of the at least one recorded first image (310, 320) by means of a trained model (136); and
- recording (540) at least one second image (330) with the second focus position (340),
wherein the at least one first image (310, 320) and the at least one second image (330) contain information that is in a context with a training of the trained model (136), wherein at least one object of one or more objects,
which are depicted in one or more of the at least one recorded first image, is depicted more sharply in the at least one recorded second image than in the at least one recorded first image,
wherein the at least one object is in a context with a training of the trained model, **characterized in that**
the trained model is adapted by feedback that changes the model, which continuously evaluates the image data, during the runtime of an experiment or a measurement.

2. The method according to claim 1, **characterized in that** the at least one first image (310, 320) is recorded with a lower resolution than the at least one second image (330).

3. The method according to any one of claims 1 and 2, **characterized in that** the at least one recorded first image (310, 320) depicts one or more objects, wherein the at least one recorded second image (330) depicts at least one of the one or more objects more sharply than the at least one recorded first image (310, 320).

4. The method according to any one of claims 1 to 3, **characterized in that** the second focus position is determined during a measurement, and/or
the at least one first focus position is shifted along an optical axis to the second focus position.

5. The method according to any one of claims 1 to 4, **characterized in that** the at least one first focus position corresponds to at least one first focal plane and the second focus position corresponds to a second focal plane, wherein the second focal plane approximately coincides with an object plane.

6. The method according to any one of claims 1 to 5, **characterized in that** the method further comprises the following step:
- adjusting (530) a device to the second focus position, wherein the device comprises an optical system and a sensor.

7. The method according to claim 6, **characterized in that**
adjusting the device (110; 210) to the second focus position comprises shifting the optical system relative to the sensor, and/or
adjusting the device to the second focus position comprises moving the optical system and the sensor (112) relative to an object.

8. The method according to any one of claims 1 to 7, **characterized in that** the method further comprises the step of collecting data, optionally, wherein an application range for the trained model is defined by metadata for classifying the collected data, wherein the metadata comprise contextual information that comprises keywords or explanations about an experiment related to the collected data and is used to classify the collected data.

9. The method according to any one of claims 1 to 8, **characterized in that** the trained model (136) is based on one or more neural networks or one or more deep learning result networks and/or
was selected from a variety of models, wherein
the plurality of trained models is classified by an application range,
each of the plurality of trained models has been trained in a specific way, the plurality of trained models is hierarchically organized, and/or individual trained models from the plurality of trained models are specialized for individual types of samples, experiments, measurements, or instrument settings.

10. A device (130; 210, 220, 230) for determining a focus position, comprising:
one or more processors (132);
one or more computer-readable storage media (138) having stored thereon computer-executable instructions that, when executed by the one or more processors (132), cause that
at least one sensor (112) captures at least one first image (310, 320), wherein image data of the at least one captured first image (310, 320) depend on at least one first focus position during the capture of the at least one first image;
a second focus position is determined, wherein the second focus position is determined based on an analysis of the at least one captured first image (310, 320) by means of a trained model (136); and
at least one second image (330) is recorded with the second focus position (340),
wherein the at least one first image (310, 320) and the at least one second image (330) contain information that is in a context with a training of the trained model (136),
wherein at least one object of one or more objects, which are depicted in one or more of the at least one recorded first image is depicted more sharply in the at least one recorded second image than in the at least one recorded first image, wherein the at least one object is in a context with a training of the trained model, **characterized in that**
the trained model is adapted by feedback that changes the model, which continuously evaluates the image data, during the runtime of an experiment or a measurement.

11. An image recording system (100) for setting a focus position, comprising:
the device (130; 210, 220, 230) according to claim 10;
the at least one sensor (112; 270);
an optical system configured to image one or more objects onto one of the at least one sensor (112; 270); and
at least one actuator (114; 260), wherein the at least one actuator (114; 260) is configured to adjust the image recording system (100) to the second focus position.

12. The image recording system according to claim 11, **characterized in that** the at least one actuator (114; 260) comprises at least one of the following: a Z-drive of a tripod, a Z-galvanometer, a piezo-focus on an objective of the optical system, a direct drive, a linear motor, a stepper motor, an ultrasonic motor, a ring motor, a micromotor, and a piezo stage, and/or
that the at least one actuator (114; 260) is part of a focusable lens, wherein the focusable lens is based on focus technologies without piezo drive.

13. The image recording system according to any one of claims 11 to 12, **characterized in that** the image recording system comprises a digital camera, a portable computer with a camera, or a microscope (210) or microscope system, and/or
the device (130; 210, 220, 230) is part of a microscope (210) or microscope system.

## Revendications

1. Procédé (500) de détermination d'une position de mise au point, avec les étapes :
- d'enregistrement (510) d'au moins une première image (310, 320), dans lequel les données d'image de l'au moins une première image (310, 320) enregistrée dépendent d'au moins une première position de mise au point lors de l'enregistrement de l'au moins une première image ;
- de détermination (520) d'une deuxième position de mise au point (340) sur la base d'une analyse de l'au moins une première image (310, 320) enregistrée au moyen d'un modèle entraîné (136) ; et
- d'enregistrement (540) d'au moins une deuxième image (330) avec la deuxième position de mise au point (340),
dans lequel l'au moins une première image (310, 320) et l'au moins une deuxième image (330) contiennent des informations qui sont liées à un entraînement du modèle entraîné (136), dans lequel au moins un objet d'un ou plusieurs objets, qui sont représentés dans une ou plusieurs de l'au moins une première image enregistrée, sont représentés dans l'au moins une deuxième image enregistrée de manière plus nette que dans l'au moins une première image capturée, dans lequel l'au moins un objet est lié à un entraînement du modèle entraîné, **caractérisé en ce que** le modèle entrainé est adapté par un retour d'information, qui modifie le modèle, lequel évalue les données d'image en permanence, au cours d'une expérience ou d'une mesure.

2. Procédé selon la revendication 1, **caractérisé en ce que** l'au moins une première image (310, 320) est enregistrée avec une résolution inférieure à l'au moins une deuxième image (330).

3. Procédé selon l'une quelconque des revendications 1 et 2, **caractérisé en ce que** l'au moins une première image (310, 320) enregistrée représente un ou plusieurs objets, dans lequel l'au moins une deuxième image (330) enregistrée représente au moins l'un des un ou plusieurs objets de manière plus nette que l'au moins une première image (310, 320) enregistrée.

4. Procédé selon l'une quelconque des revendications 1 à 3, **caractérisé en ce que** la deuxième position de mise au point est déterminée pendant une mesure, et/ou l'au moins une première position de mise au point est déplacée le long d'un axe optique vers la deuxième position de mise au point.

5. Procédé selon l'une quelconque des revendications 1 à 4, **caractérisé en ce que** l'au moins une première position de mise au point correspond à au moins un premier niveau de netteté et la deuxième position de mise au point correspond à un deuxième niveau de netteté, dans lequel le deuxième niveau de mise au point correspond à peu près à un niveau d'objet.

6. Procédé selon l'une quelconque des revendications 1 à 5, **caractérisé en ce que** le procédé comprend en outre l'étape suivante :
- le réglage (530) d'un dispositif sur la deuxième position de mise au point, dans lequel le dispositif comprend un système optique et un capteur.

7. Procédé selon la revendication 6, **caractérisé en ce que**
le réglage du dispositif (110 ; 210) sur la deuxième position de mise au point comprend un déplacement du système optique par rapport au capteur, et/ou
le réglage du dispositif sur la deuxième position de mise au point comprend un déplacement du système optique et du capteur (112) par rapport à un objet.

8. Procédé selon l'une quelconque des revendications 1 à 7, **caractérisé en ce que** le procédé comprend en outre l'étape d'acquisition de données, facultativement dans lequel un domaine d'application pour le modèle entraîné est défini par des métadonnées pour la classification des données acquises, dans lequel les métadonnées comprennent des informations contextuelles qui comprennent des mots-clés ou explications sur une expérience en lien avec les données acquises et sont utilisées pour classer les données acquises.

9. Procédé selon l'une quelconque des revendications 1 à 8, **caractérisé en ce que** le modèle entraîné (136) est basé sur un ou plusieurs réseaux neuronaux ou un ou plusieurs réseaux de résultats d'apprentissage profond et/ou
a été choisi parmi une grande variété de modèles, dans lequel
la pluralité de modèles entraînés est classée par domaine d'application,
chacun de la pluralité de modèles entraînés a été entraîné d'une manière spécifique, la pluralité de modèles entraînés est organisée hiérarchiquement et/ou des modèles entraînés individuels de la pluralité de modèles entraînés sont spécialisés dans des types individuels d'échantillons, d'expériences, de mesures ou de réglages d'instruments.

10. Dispositif (130 ; 210, 220, 230) pour la détermination d'une position focale, comprenant :
un ou plusieurs processeurs (132) ;
un ou plusieurs supports de stockage (138) lisibles par ordinateur, sur lesquels sont stockées des instructions exécutables par ordinateur qui, lorsqu'elles sont exécutées par l'un des ou les plusieurs processeurs (132), ont pour effet que
au moins un capteur (112) acquiert au moins une première image (310, 320), dans lequel les données d'image de l'au moins une première image (310, 320) acquise dépendent d'au moins une première position de mise au point lors de l'acquisition de l'au moins une première image ;
une deuxième position de mise au point est déterminée, dans lequel la deuxième position de mise au point est déterminée sur la base d'une analyse de l'au moins une première image (310, 320) acquise au moyen d'un modèle entraîné (136) ; et
au moins une deuxième image (330) avec la deuxième position de mise au point (340) est enregistrée,
dans lequel l'au moins une première image (310, 320) et l'au moins une deuxième image (330) contiennent des informations qui sont liées à un entraînement du modèle entraîné (136),
dans lequel au moins un objet d'un ou plusieurs objets, qui sont représentés dans une ou plusieurs de l'au moins une première image enregistrée, sont représentés dans l'au moins une deuxième image enregistrée de manière plus nette que dans l'au moins une première image enregistrée, dans lequel l'au moins un objet est lié à un entraînement du modèle entraîné, **caractérisé en ce que**
le modèle entraîné est adapté par un retour d'information qui modifie le modèle, lequel évalue en permanence les données d'image, au cours d'une expérience ou d'une mesure.

11. Système (100) d'enregistrement d'image pour régler une position de mise au point, comprenant :
le dispositif (130 ; 210, 220, 230) selon la revendication 10 ;
l'au moins un capteur (112 ; 270) ;
un système optique qui est configuré pour représenter un ou plusieurs objets sur l'un de l'au moins un capteur (112 ; 270) ; et
au moins un actionneur (114 ; 260), dans lequel l'au moins un actionneur (114 ; 260) est conçu pour régler le système d'enregistrement d'image (100) sur la deuxième position de mise au point.

12. Système d'enregistrement d'image selon la revendication 11, **caractérisé en ce que** l'au moins un actionneur (114; 260) comprend au moins l'un des éléments suivants : un entraînement en Z d'un statif, un galvanomètre en Z, un foyer piézoélectrique sur un objectif du système optique, un entraînement direct, un moteur linéaire, un moteur pas à pas, un moteur à ultrasons, un moteur annulaire, un micromoteur et une table piézoélectrique, et/ou
**que** l'au moins un actionneur (114 ; 260) fait partie d'un objectif pouvant être mis au point, dans lequel l'objectif pouvant être mis au point est basé sur des technologies de mise au point sans entraînement piézoélectrique.

13. Système d'enregistrement d'image selon l'une quelconque des revendications 11 à 12, **caractérisé en ce que** le système d'enregistrement d'image comprend une caméra numérique, un ordinateur portable avec caméra, ou un microscope (210) ou système de microscope, et/ou
le dispositif (130 ; 210, 220, 230) fait partie d'un microscope (210) ou système de microscope.
